# EUROPÄISCHE PATENTSCHRIFT

(11) **EP 1 156 539 B1**
(45) Veröffentlichungstag und Bekanntmachung des Hinweises auf die Patenterteilung: **27.06.2007**
(21) Anmeldenummer: 01111512.8
(22) Anmeldetag: 11.05.2001
(51) Int. Cl.: H01M 2/12

(54) **Mehrzelliger Akkumulator mit Entgasungssystem**
Multicell accumulator with gas venting system
Accumulateur multicellulaire avec système de ventilation

(30) Priorität: 15.05.2000 DE 10023746
(43) Veröffentlichungstag der Anmeldung: 21.11.2001
(73) Patentinhaber: VB Autobatterie GmbH & Co. KGaA, 30419 Hannover (DE)
(72) Erfinder: Hampe, Werner, 34431 Marsberg-Helminghausen (DE); Freitag, Jürgen, 34431 Marsberg-Bredelar (DE); Cramer, Wilhelm, 59929 Brilon-Messinghausen (DE)
(74) Vertreter: Gramm, Werner

(56) Entgegenhaltungen:
- EP-A- 0 274 612
- EP-A- 0 459 162
- EP-A- 0 462 403
- EP-A- 0 523 273
- EP-A- 0 756 338
- US-A- 4 052 534
- US-A- 5 380 604
- US-A- 6 051 332

## Beschreibung

Die Erfindung betrifft einen mehrzelligen Akkumulator mit einem Gehäuse sowie mit einem das Gehäuse gasdicht verschließenden, aus Ober- und Unterdeckel bestehenden Gehäusedeckel, wobei zwischen Ober- und Unterdeckel unter Ausbildung einer Vielzahl von miteinander korrespondierenden Labyrinthkammern eine sämtliche Zellen strömungstechnisch miteinander verbindende Entgasungsleitung vorgesehen ist, die stirnseitig in wenigstens einer Entgasungsöffnung mündet und mit einem Zündschutz verschlossen ist, wobei der Zündschutz in Normallage oberhalb der Entgasungsöffnung angeordnet ist und die Entgasungsöffnung im wesentlichen senkrecht zur Durchströmrichtung des Zündschutzes angeordnet ist.

Akkumulatoren sind aus dem Stand der Technik an sich bekannt. Sie bestehen aus unterschiedlichen Elektroden, die, sofern der Akkumulator mehrzellig ausgeführt ist, zu einzelnen Zellen zusammengefasst und in einem Gehäuse angeordnet sind. Das Gehäuse ist oberseitig mit einem Deckel verschlossen. Der Gehäusedeckel besteht hierbei zumeist aus einem Ober- und einem Unterdeckel, wobei zwischen Ober- und Unterdeckel ein Hohlraum zur Säureabscheidung ausgebildet ist. Vorbeschrieben ist ein Akkumulator dieser Art beispielsweise in der EP 0 584 528 B1 und der EP 0 274 612 A2.

Die Elektroden bestehen bei den in der Regel für Kraftfahrzeuge verwendeten Bleiakkumulatoren aus Blei und sind gitterförmig ausgestaltet, wobei die Maschen des Gitters auf der positiven Seite mit Bleioxyd und auf der negativen Seite sogenanntem Bleischwamm gefüllt sind. Als Elektrolyt wird in der Regel Schwefelsäure verwendet, die entweder in flüssiger oder nach Art eines Gels in eingedickter Form verwendet werden kann. Bei Ladevorgängen kommt es zu chemischen Reaktionen im Elektrolyten, die unter anderem auch zu einer Gasentwicklung führen. Um einem unkontrollierten Druckaufbau innerhalb des Akkumulatorgehäuses und im schlimmsten Fall einer explosionsartigen Gasentspannung entgegen zu wirken, weist der Akkumulator zur Entgasung Gasauslaßöffnungen auf. Diese sind zumeist im Bereich des Deckels ausgebildet.

Zum Abführen der beispielsweise bei einer Elektrolytverdunstung in Folge von Aufladung entstehenden, leicht entzündlichen Gase sind aus dem Stand der Technik zwei grundlegende Entgasungsmöglichkeiten bekannt. Zum einen kann die Gasableitung derart erfolgen, daß die Gase direkt über die die einzelnen Zellenöffnungen verschließenden Stopfen an die den Akkumulator umgebende Atmosphäre abgegeben werden. Bekannt ist eine solche Gasableitung beispielsweise aus der EP 0 756 338. Zum anderen kann die Gasableitung über eine zentrale Entgasungsleitung erfolgen. Bei dieser Entgasungsvariante sind die einzelnen Zellen des Akkumulators über eine gemeinsame, zumeist im Batteriedeckel integrierte und quer zu den Zellen verlaufende Entgasungsleitung miteinander verbunden. Abzuleitende Gase werden über die Entgasungsleitung zumeist stirnseitig des Gehäusedeckels aus dem Akkumulatordeckel ausgeführt und an die Atmosphäre abgegeben. Vorbekannt ist die zuletzt genannte Entgasungsvariante unter anderem aus der EP 0 305 822 A1 und der US 5,561,001. Bei beiden vorgenannten Entgasungsvarianten werden die abzuleitenden Gase vor dem Austritt aus dem Akkumulator durch eine poröse Filterscheibe, die sogenannte Fritte, geleitet. Dies dient insbesondere der Vermeidung von Rückzündungen der leicht entzündlichen Gase zurück ins Akkumulatoreninnere.

Bei einer unsachgemäßen Handhabung des Akkumulators oder wenn dieser infolge eines notwendigerweise erforderlichen Montageschritts aus der Normallage herausbewegt und verdreht bzw. gekippt wird, tritt Säure aus den Akkumulatorzellen aus und läuft in den im Gehäusedeckel ausgebildeten Hohlraum. Dies ist selbstverständlich unerwünscht, zumal bei entsprechend hohem Innendruck ausgetretene Säure durch die Entgasungsöffnung hindurch aus dem Akkumulatorgehäuse heraus nach außen gedrückt wird. Dieser Umstand ist insbesondere dann von Nachteil, wenn als Starterbatterien für Kraftfahrzeuge zu verwendende Akkumulatoren nach einer Endmontage für den Einbau in das Kraftfahrzeug durch Drehen oder Kippen aus der Normallage heraus zu bewegen sind und infolge dieses Umstands Säure aus den Akkumulatoren austritt.

Zudem ist bei den vorbekannten gattungsgemäßen Akkumulatoren von Nachteil, dass Wasser von außen durch die Entgasungsöffnung hindurch in das Akkumulatoreninnere eindringen kann. Auch können mit dem Wasser transportierte Schmutzpartikel in die Entgasungsleitung gelangen und den Zündschutz verstopfen. Eine ungehinderte Entgasung ist dann nicht mehr möglich und kann im schlimmsten Fall zu einer derartigen Überdruckbildung im Innenraum des Akkumulators führen, dass dieser explosionsartig auseinander gerissen wird.

Zur Vermeidung der oben genannten Nachteile liegt der Erfindung die **Aufgabe** zugrunde, einen mehrzelligen Akkumulator mit zentraler Entgasungsleitung bereitzustellen, bei dem unter allen Betriebszuständen eine ausreichende Entgasung sichergestellt und zugleich das Auslaufen von in der Entgasungsleitung befindlicher Säure auch bei hohem Innendruck weitestgehend verhindert ist.

**Gelös**t wird diese Aufgabe erfindungsgemäß dadurch, dass die Entgasungsleitung im Bereich zwischen Zündschutz und Entgasungsöffnung eine Auffangkammer bildende Erweiterung aufweist, die in Normallage des Akkumulators unterhalb der Entgasungsöffnung angeordnet ist und dass sich die Auffangkammer in Normallage zur Aufnahme von Säure sowie von durch die Entgasungsöffnung eindringender Fluide und Schmutzartikel bis deutlich unterhalb der Entgasungsöffnung erstreckt.

Mit der Erfindung wird erstmals ein Akkumulator vorgeschlagen, bei dem die Entgasungsleitung im Bereich zwischen Zündschutz und Entgasungsöffnung eine Auffangkammer aufweist. Diese Auffangkammer dient der Aufnahme von Restmengen an Säure, die beispielsweise bei unsachgemäßer Handhabung oder bei zu hohem Innendruck durch den Zündschutz hindurch gedrückt wird. In Normallage der Batterie ist die Auffangkammer unterhalb der Entgasungsöffnung angeordnet, wobei die Entgasungsöffnung im Wesentlichen senkrecht zur Durchströmrichtung des Zündschutzes angeordnet ist. Somit wird erreicht, dass ausgetretene und durch den Zündschutz hindurch gedrückte Säure der Schwerkraft folgend in die Auffangkammer gelangt, nicht jedoch durch die im wesentlichen senkrecht zur Entgasungsrichtung stehende Entgasungsöffnung nach außen gelangt. Gleichwohl ist mit der erfindungsgemäßen Ausgestaltung eine ausreichende Entgasung unter allen Betriebszuständen sichergestellt. Aus dem Zelleninneren des Akkumulators abströmendes Gas durchströmt in Entgasungsrichtung den Zündschutz und gelangt anschließend über die Entgasungsöffnung in die den Akkumulator umgebende Atmosphäre. Hierbei stellt die unterhalb der Entgasungsöffnung ausgebildete Auffangkammer kein Strömungshindernis für das abströmende Gas dar.

Ein weiterer Vorteil der erfindungsgemäßen Ausgestaltung liegt darin begründet, daß von außen über die Entgasungsöffnung eindringende Fluide, beispielsweise Wasser, von der Auffangkammer aufgefangen werden und nicht in das Entgasungssystem des Akkumulators gelangen. Gleichfalls werden über die Entgasungsöffnung eindringende Schmutzpartikel in der Auffangkammer gesammelt, so daß eine Verschmutzung bzw. Verstopfung des maschenartigen Gewebes des Zündschutzes in vorteilhafter Weise vermieden wird. Mithin wird durch die erfindungsgemäße Ausgestaltung sowohl ein Auslaufen von in der Entgasungsleitung befindlicher Säure auch bei hohem Innendruck als auch ein ungewolltes Eindringen über die Entgasungsöffnung von Fluiden oder Schmutzpartikeln weitestgehend verhindert, wobei eine ausreichende Entgasung unter allen Betriebszuständen sichergestellt ist.

Gemäß einem Merkmal der Erfindung weist die Auffangkammer eine ausreichende Größe zur Aufnahme von Säure sowie von durch die Entgasungsöffnung eindringender Fluide und Schmutzpartikel auf. Die Größe der Auffangkammer ist dabei so bemessen, daß einerseits ausreichender Aufnahmeraum für austretende Säurerestmengen zur Verfügung steht und eine Abgabe von Säuren nach außen an die den Akkumulator umgebende Atmosphäre weitestgehend verhindert wird, und daß andererseits der inklusive Auffangkammer zwischen Entgasungsöffnung und Zündschutz ausgebildete Raum nicht eine solche Größe annimmt, daß sich dort ausströmendes leicht entzündliches Gas in einer sicherheitsrelevanten Menge ansammeln kann. Die räumliche Ausdehnung ist mithin dergestalt dimensioniert, daß selbst für den Fall, daß sich die gesamte im Bereich zwischen der Entgasungsöffnung und dem Zündschutz in der Entgasungsleitung befindliche Menge an Gas entzündet, durch den Zündschutz eine Rückzündung ins Akkumulatoreninnere vermieden wird.

Gemäß einem weiteren Merkmal der Erfindung sind die Bodenflächen der Labyrinthkammem gegen die Entgasungsöffnung geneigt. Die sich infolge einer unsachgemäßen Handhabung des Akkumulators oder aufgrund von Säureabscheidung in den Labyrinthkammern ansammelnde Säure wird mithin zurück in Richtung der Akkumulatorenzellen geführt. Der Rückfluß ausgetretener Säure zurück in das Zelleninnere wird somit ermöglicht. Erst bei entsprechend hohem Innendruck wird ausgetretene Säure entgegen der Neigung der Bodenfläche der Labyrinthkammer in die Entgasungsleitung gedrückt.

Gemäß einem weiteren Merkmal der Erfindung ist die Zellenöffnung einer jeden Zelle durch einen Verschlußstopfen gasdicht verschlossen. Ein unkontrolliertes Ausströmen sowohl von Gas als auch von Säure wird mithin vermieden. Hierzu liegt der Verschlußstopfen unter Zwischenordnung einer umlaufenden Runddichtung am Oberdeckel an und dichtet die zwischen Ober- und Unterdeckel ausgebildeten Kammern gegenüber der den Akkumulator umgebenden Atmosphäre ab. Ferner liegt der Verschlußstopfen unter Zwischenordnung einer umlaufenden Dichtung gegen den Unterdeckel an und dichtet die zwischen Ober- und Unterdeckel ausgebildeten Kammern gegenüber dem Zelleninneren ab.

Für eine kontrollierte Entgasung bzw. zur Säureabscheidung steht das Zelleninnere über eine Öffnung in der Mantelfläche des Verschlußstopfens strömungstechnisch mit den Labyrinthkammern in Verbindung. Diese Öffnung ist mit einem Ventil, vorzugsweise einem Überdruckventil oder einer Dichtmembran verschlossen. Sichergestellt wird mit dieser Ausgestaltung, daß eine Entgasung der Akkumulatorenzellen ebenso wie ein Austreten von Säure, beispielsweise durch Säureabscheidung, nicht unkontrolliert, sondern vielmehr zielgerichtet über die in der Mantelfläche des jeweiligen Verschlußstopfens ausgebildete Öffnung in die Labyrinthkammern erfolgt. Die geneigte Bodenfläche der Labyrinthkammern sorgt dafür, daß ausgetretene Säure wieder zurück in Richtung Auslaßöffnung strömt und erst bei entsprechend hohem Innendruck durch die Entgasungsleitung in Richtung Entgasungsöffnung gedrückt wird. Die unterhalb der Entgasungsöffnung vorgesehene Auffangkammer fängt die ausgetretene Säure auf, womit ein Ausströmen der Säure über die Entgasungsöffnung nach außen in vorteilhafter Weise verhindert wird.

Weitere Vorteile und Merkmale der Erfindung ergeben sich aus der folgenden Beschreibung anhand der Figuren. Dabei zeigen:
- Fig. 1: in einer Draufsicht einen Unterdeckel;
- Fig. 2: in einer Draufsicht von unten einen Oberdeckel;
- Fig. 3: einen Teilausschnitt gemäß Fig. 1;
- Fig. 4: eine geschnittene Teilseitenansicht einer Auffangkammer.

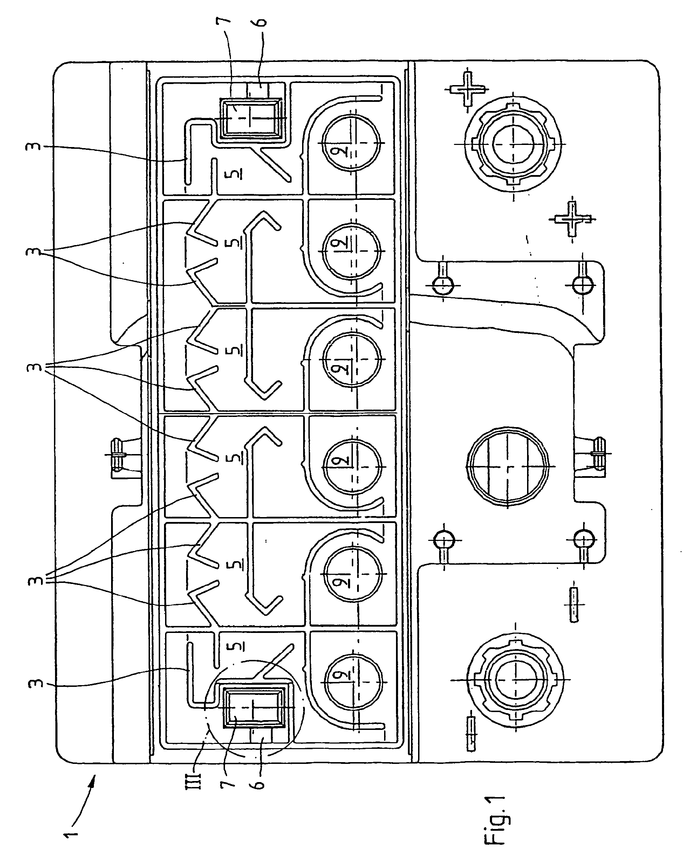

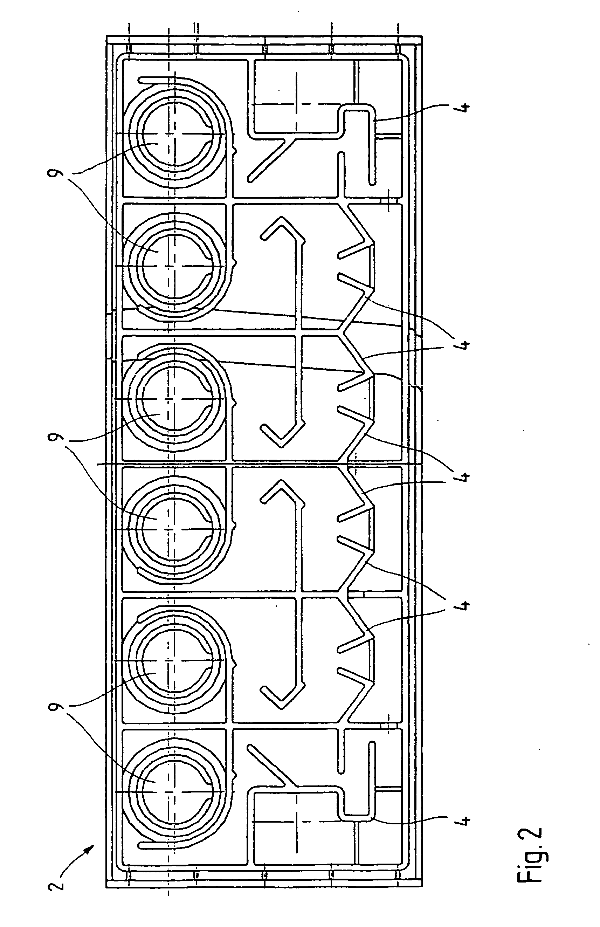

Fig. 1 zeigt in einer Draufsicht den Unterdeckel 1 eines aus Ober- und Unterdeckel 2, 1 bestehenden Gehäusedeckels eines Akkumulators. Der Oberdeckel 2 ist in einer Draufsicht von unten in Fig. 2 dargestellt. Für die Ausbildung des Gehäusedeckels werden Unterdeckel 1 und Oberdeckel 2 gasdicht miteinander verbunden, beispielsweise verschweißt oder verklebt.

Der Unterdeckel 1 weist oberseitig eine Vielzahl von nach oben gerichteten Stegen 3 auf. Der Oberdeckel 2 ist korrespondierend zum Unterdeckel 1 ausgebildet und weist nach unten gerichtete Stege 4 auf, welche mit den Stegen 3 des Unterdeckels 1 fest verbunden, vorzugsweise verschweißt oder verklebt werden. Der Oberdeckel 2 verfügt zudem über Rückhaltestege 10. Diese verringern das Vordringen von Säure in Kopflage und erhöhen gleichzeitig den Zeitraum bis zum Austritt der Säure. Die Stege 3, 4 definieren zwischen dem im Ober- und Unterdeckel 2, 1 ausgebildeten Hohlraum eine Vielzahl von Labyrinthkammem 5. Diese Labyrinthkammern 5 dienen der Säureabscheidung.

Ober- und Unterdeckel 2, 1 weisen ferner Zellenöffnungen 9 auf. Im betriebsfertigen Zustand des Akkumulators sind diese Zellenöffnungen 9 durch in den Figuren nicht dargestellte Verschlußstopfen gasdicht verschlossen. Hierbei ist jeder Verschlußstopfen mit einer Durchlaßöffnung versehen, über die das Zelleninnere zur Säureabscheidung mit den Labyrinthkammern 5 strömungstechnisch in Verbindung steht. Diese in den Verschlußstopfen vorgesehenen Öffnungen ermöglichen eine Entgasung der jeweiligen Zelle. Der aus der Zelle austretende Säurenebel wird in die Labyrinthkammern 5 geleitet und dort abgeschieden. Die Bodenflächen der Labyrinthkammern sind geneigt ausgebildet, so daß aus dem Säurenebel abgeschiedene Säure zurück in Richtung der Zellenöffnungen 9 strömt und über die in den Verschlußstopfen vorgesehenen Durchlaßöffnungen hindurch zurück in das Zelleninnere gelangt.

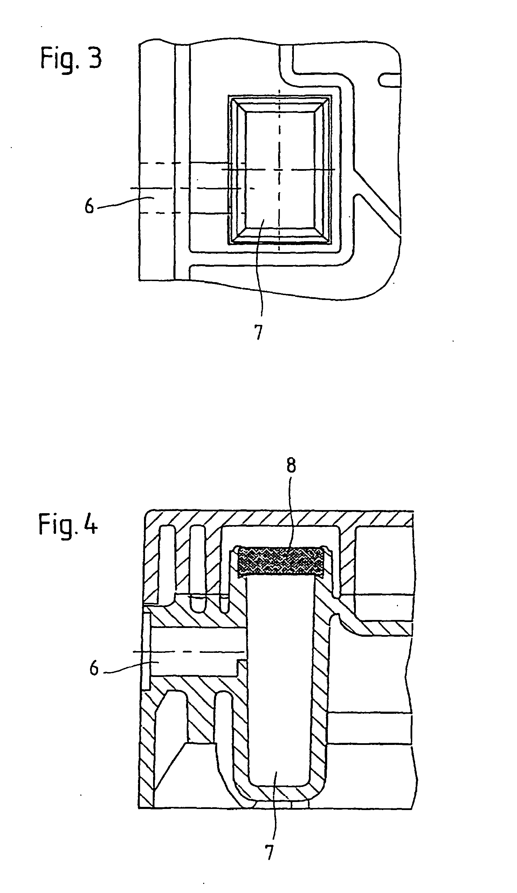

Die insbesondere bei der Aufladung des Akkumulators infolge stattfindender chemischer Reaktionen entstehenden Gase werden zur Vermeidung eines zu hohen Innendrucks aus den Labyrinthkammern 5 über die stirnseitig am Unterdeckel 1 angeordneten Entgasungsöffnungen 6 an die den Akkumulator umgebende Atmosphäre abgegeben. Hierdurch wird das Erreichen eines kritischen Überdrucks im Zelleninneren infolge von Gasentwicklung verhindert. Einen vergrößerten Teilausschnitt der Entgasungsöffnung 6 zeigt Fig. 3.

Um Rückzündungen ins Akkumulatoreninnere vermeiden zu können, ist in Ausströmrichtung der austretenden Gase vor der Entgasungsöffnung 6 ein Zündschutz 8 angeordnet. Dies zeigt am deutlichsten Fig. 4. Ferner ist Fig. 4 zu entnehmen, daß die Entgasungsleitung im Bereich zwischen Zündschutz 8 und Entgasungsöffnung 6 eine Auffangkammer 7 bildende Erweiterung aufweist. Die Auffangkammer 7 befindet sich dabei in Normallage des Akkumulators stets unterhalb der Entgasungsöffnung 6. Die Auffangkammer 7 dient dazu, Restmengen an Säure aufzufangen, die beispielsweise infolge von unsachgemäßer Handhabung oder zu hohem Innendruck durch den Zündschutz 8 durchgedrückt werden. Ein Auslaufen von Säure durch die Entgasungsöffnung 6 wird mithin in vorteilhafter Weise vermieden. Die Entgasungsöffnung 6 ist im wesentlichen senkrecht zur Durchströmrichtung des Zündschutzes angeordnet, so daß eine ausreichende Entgasung unter alle Betriebszuständen sichergestellt und die Funktion der Auffangkammer 7 nicht beeinträchtigt ist.

Die Auffangkammer 7 verhindert ferner das Eindringen von Wasser und Schmutzpartikeln über die Entgasungsöffnung 6 ins Zelleninnere. Über die Zellenöffnung 6 eindringendes Wasser sammelt sich unter Einwirkung der Schwerkraft in der unterhalb der Entgasungsöffnung 6 angeordneten Auffangkammer 7. Gleichalls sammeln sich in der Auffangkammer 7 die über die Entgasungsöffnung 6 unter Umständen eindringenden Schmutzpartikel, womit eine Verstopfung des Zündschutz 8 verhindert wird. Mithin ist ausgeschlossen, daß es infolge verdreckter bzw. verstopfter Zündschutze 8 zu einem ungewollt hohem Druckaufbau innerhalb des Akkumulatorgehäuses kommen kann.

Durch die erhöhte Anordnung des Zündschutzes 8 im Unterdeckel 1 wird zudem erreicht, daß dem Austritt zuströmende Säure in Gebrauchslage des Akkumulators einen vergleichsweise längeren Weg zurückzulegen hat, womit eine Art Rückhalt geschaffen ist.

### Bezugszeichenliste

- 1: Unterdeckel
- 2: Oberdeckel
- 3: Steg
- 4: Steg
- 5: Labyrinthkammer
- 6: Entgasungsöffnung
- 7: Auffangkammer
- 8: Zündschutz
- 9: Zellenöffnung
- 10: Rückhaltesteg

## Patentansprüche

1. Mehrzelliger Akkumulator mit einem Gehäuse sowie mit einem das Gehäuse gasdicht verschließenden, aus Ober- und Unterdeckel (2, 1) bestehenden Gehäusedeckel, wobei zwischen Ober- und Unterdeckel (2, 1) unter Ausbildung einer Vielzahl von miteinander korrespondierenden Labyrinthkammern (5) eine sämtliche Zellen strömungstechnisch miteinander verbindende Entgasungsleitung vorgesehen ist, die stirnseitig in wenigstens einer Entgasungsöffnung (6) mündet und mit einem Zündschutz (8) verschlossen ist, wobei der Zündschutz (8) in Normallage oberhalb der Entgasungsöffnung (6) angeordnet ist und die Entgasungsöffnung (6) im wesentlichen senkrecht zur Durchströmrichtung des Zündschutzes (8) angeordnet ist, **dadurch gekennzeichnet, dass** die Entgasungsleitung im Bereich zwischen Zündschutz (8) und Entgasungsöffnung (6) eine Auffangkammer (7) bildende Erweiterung aufweist, die in Normallage des Akkumulators unterhalb der Entgasungsöffnung (6) angeordnet ist und dass sich die Auffangkammer (7) in Normallage zur Aufnahme von Säure sowie von durch die Entgasungsöffnung (6) eindringender Fluide und Schmutzpartikel bis deutlich unterhalb der Entgasungsöffnung (6) erstreckt.

2. Akkumulator nach den Anspruch 1, **dadurch gekennzeichnet, dass** die Bodenfläche der Labyrinthkammern (5) gegen die Entgasungsöffnung (6) geneigt sind.

3. Akkumulator nach einem der Ansprüche 1 oder 2, **dadurch gekennzeichnet, dass** der Oberdeckel (2) Rückhaltestege (10) aufweist.

4. Akkumulator nach einem der vorhergehenden Ansprüche, **dadurch gekennzeichnet, dass** die Zellöffnung (9) einer Zelle durch einen Verschlussstopfen gasdicht verschlossen ist.

5. Akkumulator nach einem der vorhergehenden Ansprüche, **dadurch gekennzeichnet, dass** der Verschlussstopfen gegen den Oberdeckel (2) unter Zwischenordnung einer umlaufenden Runddichtung anliegt und die zwischen Ober- und Unterdeckel (2, 1) ausgebildeten Labyrinthkammern (5) gegenüber der den Akkumulator umgebenden Atmosphäre abdichtet.

6. Akkumulator nach Anspruch 5, **dadurch gekennzeichnet, dass** die Runddichtung ein O-Ring ist und einstückig am Verschlussstopfen angeformt ist.

7. Akkumulator nach einem der vorhergehenden Ansprüche, **dadurch gekennzeichnet, dass** der Verschlussstopfen gegen den Unterdeckel (2) unter Zwischenordnung einer umlaufenden Dichtung anliegt und die zwischen Ober- und Unterdeckel (2, 1) ausgebildeten Labyrinthkammern (5) gegenüber dem Zelleninneren abdichtet.

8. Akkumulator nach Anspruch 7, **dadurch gekennzeichnet, dass** die Dichtung eine Lamellendichtung ist.

9. Akkumulator nach einem der vorhergehenden Ansprüche, **dadurch gekennzeichnet, dass** das Zelleninnere zur Säureabscheidung über eine Öffnung in der Mantelfläche des Verschlussstopfens strömungstechnisch mit den Labyrinthkammern (5) in Verbindung steht.

10. Akkumulator nach Anspruch 9, **dadurch gekennzeichnet, dass** die Öffnung mit einem Ventil versehen ist.

11. Akkumulator nach Anspruch 10, **dadurch gekennzeichnet, dass** das Ventil ein Überdruckventil ist.

12. Akkumulator nach Anspruch 10, **dadurch gekennzeichnet, dass** das Ventil eine Druckmembran ist, die an wenigstens einer Stelle unter Bildung einer Durchlassöffnung mit einem Durchbruch versehen ist.

## Claims

1. Multi-cell accumulator with a housing as well as a housing cover being composed of an upper and a lower cover part (2, 1) enclosing the housing in a gas-tight fashion, whereas with the formation of multiples labyrinth chambers (5) corresponding with each other, a degassing duct between the upper and lower cover parts (2,1) is provided, which fluidically links all cells, opens out at its forward end into at least one gas vent (6) and is closed off by a spark suppressor (8), the spark suppressor (8) being arranged in a normal position above the gas vent (6) and the gas vent (6) being positioned at an essentially perpendicular angle relative to the direction of flow through the spark suppressor (8), **characterized in that** the degussing duct is provided with a widened section forming a collecting chamber (7) in the area between the spark suppressor (8) and the gas vent (6), which, when the accumulator is in its normal position, is situated underneath the gas vent (6), and that the collecting chamber (7) in its normal position for receiving acid as well as fluids and dirt particles entering through the gas vent (6) extends clearly as far as underneath the gas vent (6).

2. Accumulator according to claim 1, **characterized in that** the bottom surface of the labyrinth chambers (5) slopes off towards the gas vent (6).

3. Accumulator according to the claims 1 or 2, **characterized in that** the upper cover part (2) is provided with retaining ridges (10).

4. Accumulator according to one of the preceding claims, **characterized in that** the cell opening (9) of a cell is closed off in a gas-tight fashion by means of a plug.

5. Accumulator according to one of the preceding claims, **characterized in that** the plug abuts against the upper cover part (2) via an intermediate circumferential circular gasket, sealing off the labyrinth chambers (5) situated between the upper and lower cover parts (2, 1) from the atmosphere surrounding the accumulator.

6. Accumulator according to claim 5, **characterized in that** the circular gasket is an O-ring and integrally formed onto the plug.

7. Accumulator according to one of the preceding claims, **characterized in that** the plug abuts against the lower cover part (1) via an intermediate circumferential gasket sealing off the labyrinth chamber (5) situated between the upper and lower cover parts (2,1) from the interior of the cells.

8. Accumulator according to claim 7, **characterized in that** the gasket is a lamellar gasket.

9. Accumulator according to one of the preceding claims, **characterized in that** the cell interior, for the acid precipitation, communicates fluidically via an orifice in the outer surface of the plug with the labyrinth chambers (5).

10. Accumulator according to claim 9, **characterized in that** the orifice is provided with a valve.

11. Accumulator according to claim 10, **characterized in that** the valve is an overpressure valve.

12. Accumulator according to claim 10, **characterized in that** the valve is a pressure diaphragm, which is at least at one point provided with a breakthrough constituting a passage.

## Revendications

1. Accumulateur multicellulaire comprenant un boîtier ainsi qu'un couvercle de boîtier fermant le boîtier de manière étanche aux gaz, constitué d'un couvercle supérieur et inférieur (2, 1), avec entres les couvercles supérieur et inférieur (2, 1) une conduite de dégazage qui relie entre elles de manière fluidique toutes les cellules, pour former une pluralité de chambres de labyrinthe (5) correspondant les unes avec les autres, cette conduite de dégazage débouchant du côté frontal dans au moins une ouverture de dégazage (6) et étant fermée par une protection anti-étincelle (8), la protection anti-étincelle (8) étant disposée dans la position normale, au-dessus de l'ouverture de dégazage (6), et l'ouverture de dégazage (6) étant pour l'essentiel perpendiculaire à la direction de traversée de la protection anti-étincelle (8),
**caractérisé en ce que**
la conduite de dégazage présente, dans la zone entre la protection anti-étincelle (8) et l'ouverture de dégazage (6), un élargissement formant une chambre de réception (7) qui, dans la position normale de l'accumulateur, est en dessous de l'ouverture de dégazage (6), et la chambre de réception (7) s'étend jusque nettement en dessous de l'ouverture de dégazage (6), dans la position normale, pour recueillir l'acide ainsi que les fluides et particules de saleté qui s'infiltrent à travers l'ouverture de dégazage (6)

2. Accumulateur selon la revendication 1,
**caractérisé en ce que**
la surface de fond des chambres de labyrinthe (5) est inclinée par rapport à l'ouverture de dégazage (6).

3. Accumulateur selon l'une des revendications 1 ou 2,
**caractérisé en ce que**
le couvercle supérieur (2) présente des entretoises de retenue (10).

4. Accumulateur selon l'une des revendications précédentes,
**caractérisé en ce que**
l'ouverture ce cellule (9) d'une cellule est fermée de manière étanche aux gaz par un bouchon de fermeture.

5. Accumulateur selon l'une des revendications précédentes,
**caractérisé en ce que**
le bouchon de fermeture repose contre le couvercle supérieur (2) par l'intermédiaire d'un joint circulaire périphérique et assure l'étanchéité entre les chambres de labyrinthe (5) formées entre les couvercles supérieur et inférieur (2, 1) et l'atmosphère environnant l'accumulateur.

6. Accumulateur selon la revendication 5,
**caractérisé en ce que**
le joint circulaire est un joint torique et est formé d'une seule pièce au niveau du bouchon de fermeture.

7. Accumulateur selon l'une des revendications précédentes,
**caractérisé en ce que**
le bouchon de fermeture repose contre le couvercle inférieur (2) par l'intermédiaire d'un joint périphérique et assure l'étanchéité entre les chambres de labyrinthe (5) formées entre les couvercles supérieur et inférieur (2, 1) et l'intérieur des cellules.

8. Accumulateur selon la revendication 7,
**caractérisé en ce que**
le joint est un joint à lamelles.

9. Accumulateur selon l'une des revendications précédentes,
**caractérisé en ce que**
pour la séparation de l'acide, l'intérieur des cellules, est en liaison fluidique avec les chambres de labyrinthe (5) par une ouverture dans la surface d'enveloppe du bouchon de fermeture.

10. Accumulateur selon la revendication 9,
**caractérisé en ce que**
l'ouverture est pourvue d'une soupape.

11. Accumulateur selon la revendication 10,
**caractérisé en ce que**
la soupape est une soupape de décharge.

12. Accumulateur selon la revendication 10,
**caractérisé en ce que**
la soupape est une membrane de pression pourvue à au moins un endroit d'un passage, formant une ouverture de passage.
